Europäisches Patentamt

European Patent Office

Office européen des brevets

(19)

(11) **EP 0 682 857 B1**

(12) **FASCICULE DE BREVET EUROPEEN**

(45) Date de publication et mention
de la délivrance du brevet:
**28.07.1999 Bulletin 1999/30**

(51) Int. Cl.6: **A01C 17/00**

(21) Numéro de dépôt: **95460020.1**

(22) Date de dépôt: **27.04.1995**

(54) **Procédé de réglage de la largeur d'épandage pour machine d'épandage de particules granulaires**

Verfahren um die Streubreite für einen Granulatstreuer zu regeln

Method for controlling the spreading for a granular material broadcaster

(84) Etats contractants désignés:
**BE DE ES FR GB IT NL**

(30) Priorité: **28.04.1994 FR 9405423**

(43) Date de publication de la demande:
**22.11.1995 Bulletin 1995/47**

(73) Titulaire: **SULKY-BUREL S.A.**
**F-35220 Chateaubourg (FR)**

(72) Inventeur: **Clochard, Daniel**
**F-35220 Domagne (FR)**

(74) Mandataire: **Le Faou, Daniel et al**
**Cabinet Regimbeau**
**11, rue Franz Heller,**
**Centre d'Affaires Patton**
**B.P. 19107**
**35019 Rennes Cédex 7 (FR)**

(56) Documents cités:
**EP-A- 0 251 401       EP-A- 0 287 165**
**EP-A- 0 298 549       EP-A- 0 303 325**
**GB-A- 1 127 049       US-A- 4 079 362**

**Description**

La présente invention concerne un procédé de réglage de la largeur d'épandage pour une machine servant à épandre sur le sol des particules granulaires.

Elle concerne également un système d'évaluation de la densité en grains d'un flux de grains en suspension en une zone de ce flux, qui est destiné à permettre la mise en oeuvre de ce procédé.

L'invention a été conçue plus particulièrement pour l'épandage de granulés d'engrais sur un sol arable.

Toutefois, l'invention ne se limite pas à ce domaine particulier de la technique ; elle peut trouver application dans d'autres branches de l'industrie ou de l'agriculture, lorsqu'on a affaire à la projection d'un flux de particules en suspension dans un fluide, notamment dans l'air.

A titre d'exemple on peut citer l'épandage de sable ou de sel sur des chaussées verglacées.

Les machines servant à épandre de l'engrais sur un terrain cultivable consistent généralement en une trémie portée par un tracteur et contenant les engrais à épandre, le fond de la trémie présentant au moins une ouverture de sortie des engrais qui surplombe un disque rotatif, sensiblement horizontal, et tournant autour d'un axe vertical, portant des pales, et adapté pour projeter les particules d'engrais par effet centrifuge. Le flux de particules projetées quittant le disque forme une nappe approximativement horizontale, s'étendant transversalement à l'arrière de la machine. Généralement, ces machines utilisent deux disques rotatifs, tournant en sens inverse, placés côte-à-côte.

Les machines modernes sont conçues pour réaliser une distribution homogène des particules d'engrais sur une grande largeur, en général comprise entre 9 et 36 mètres.

L'épandage d'une parcelle de terrain cultivable se fait par courses aller/retour de la machine, l'épandage se faisant à chaque fois sur une bande de largeur déterminée qui chevauche légèrement la bande adjacente de manière à ce que la diminution de densité inévitable sur les bords de chaque bande soit compensée d'une bande à l'autre par ce chevauchement.

Il existe plusieurs méthodes pour modifier la largeur de la bande selon laquelle se fait l'épandage.

Parmi celle-ci, on peut citer le changement du (ou des) disque(s) rotatif(s), le changement des pales ou la modification de leur orientation sur le disque, la variation de la vitesse du (ou des) disque(s), et la modification de la zone de chute de l'engrais sur le (ou les) disque(s).

Cette dernière méthode, qui est du reste préconisée par la demanderesse, fait l'objet des documents de brevet FR-B-2 566 991 et FR-A-2 673 420.

Selon ce dernier document, la variation du point de chute de l'engrais sur le disque se fait par l'intermédiaire d'une goulotte articulée, pouvant être orientée directement depuis le poste de conduite du tracteur.

Une difficulté rencontrée par l'utilisateur de la machine d'épandage lorsqu'il souhaite que l'opération se fasse sur une largeur bien définie est liée au fait que, pour des conditions identiques de projection des particules (même vitesse du disque, même orientation des pales et même point de chute) la largeur effective de l'épandage dépend de la nature de l'engrais. Cette largeur est en effet fonction de la masse volumique, de la granulométrie et du coefficient de frottement des particules d'engrais sur le disque, coefficient qui dépend lui-même du degré d'humidité de l'engrais.

La détermination de la largeur d'épandage est donc une opération délicate.

Généralement, l'opérateur commence par faire un épandage préliminaire, sur une surface limitée, après avoir déposé des récipients collecteurs transversalement sur le sol. Après cette opération, il mesure les quantités d'engrais recueillies dans les différents récipients, ce qui lui permet d'évaluer la largeur effective de l'épandage, et d'effectuer en conséquence les réglages nécessaires pour obtenir la largeur voulue. Ceci suppose souvent plusieurs opérations préalables, et des tâtonnements, qui sont relativement fastidieux et pas toujours correctement effectués par les utilisateurs. Une méthode de ce genre est décrite par exemple dans le document EP-A-0 376 923.

Si on considère un repère cartésien, dont l'axe des abscisses correspond à l'angle de rotation du disque projetant les engrais, et dont l'axe des ordonnés correspond à la densité spatiale des grains d'engrais dans le flux projeté, on obtient une courbe continue - généralement appelée spectre de diffusion transversale des grains - qui croît, passe par un maximum, puis décroît. La courbe a la forme d'un dôme.

Des essais nombreux effectués par la demanderesse, il ressort que cette courbe en forme de dôme est plus ou moins aplatie selon le type d'engrais utilisé. En revanche, la demanderesse s'est aperçue que, de manière assez surprenante, le maximum - ou pic - de la courbe est toujours sensiblement positionnée de la même manière, c'est-à-dire conserve la même orientation angulaire, pour une largeur d'épandage déterminée.

Ainsi, il est facile, par des essais sur le terrain, d'associer à une largeur donnée d'épandage la position angulaire du pic de la courbe, ceci quel que soit le type d'engrais utilisé.

Une fois connue cette relation entre largeur d'épandage et positionnement angulaire du pic, et ceci une fois pour toute, il suffit à l'usager qui souhaite obtenir une largeur d'épandage voulue de régler les conditions de travail de la machine pour que le pic du spectre se trouve dans la position angulaire correspondante.

C'est pourquoi, pour parvenir à cet objectif, l'invention propose un capteur permettant d'évaluer la densité en grains du flux quittant la machine en une zone de ce flux. Ce capteur est ajustable transversalement.

Ainsi, si on place le capteur dans la zone correspondant au pic, il suffit à l'usager de faire varier les conditions de travail, par exemple en manoeuvrant la goulotte orientable si on a affaire à une machine dans laquelle il est possible de faire varier le point de chute des engrais sur le disque, pour que la mesure faite par le capteur corresponde au maximum de la densité.

Il a été proposé de placer dans la nappe de particules quittant le disque un certain nombre d'organes de mesure (capteurs) qui sont couplés à un dispositif d'affichage, afin de montrer visiblement la répartition de la matière. Cependant, un tel système - décrit par exemple dans le document EP-B-0 303 325 - ne prévoit pas la possibilité d'ajuster transversalement les capteurs, et ne permet donc pas de mettre en oeuvre le procédé selon l'invention.

Cette constatation préliminaire ayant été faite par la demanderesse, il lui a fallu développer un système qui puisse assurer une détection précise des variations de la densité des grains, ce système étant néanmoins peu coûteux, fiable, et pouvant résister aux agressions du milieu, notamment à l'humidité et à la poussière.

Le procédé de réglage de la largeur d'épandage et le système d'évaluation de la densité en grains d'un flux de grains en suspension en une zone de ce flux, qui font l'objet de la présente invention, permettent d'atteindre cet objectif.

Le procédé qui fait l'objet de l'invention s'applique à une machine d'épandage comprenant une trémie contenant les grains à épandre, et dont le fond présente au moins une ouverture de sortie par gravité des grains, ainsi qu'au moins un disque rotatif, d'axe sensiblement vertical, disposé en-dessous de ladite ouverture de sortie des grains, et apte à les projeter par effet centrifuge de telle manière que le flux de grains en suspension quittant la machine s'étale selon une nappe approximativement horizontale, cette machine étant équipée d'au moins un élément d'impact positionné dans ladite nappe, d'un circuit électronique apte à délivrer un signal électrique qui est fonction de la fréquence d'impact des grains contre l'élément d'impact, ainsi que d'un dispositif d'affichage d'une information représentative de ce signal, des moyens étant prévus qui permettent de faire varier la largeur d'épandage.

Ce procédé est remarquable en ce qu'on utilise deux éléments d'impact ajustables transversalement, qu'on place dans des positions qui, pour la largeur voulue, correspondent à des fréquences d'impact prédéterminées, et qu'on fait varier la largeur réelle d'épandage jusqu'à ce que les informations fournies au dispositif d'affichage soient représentatives de la largeur voulue.

Par ailleurs, selon un certain nombre de caractéristiques avantageuses, non limitatives, du procédé :

- la courbe de répartition de la densité spatiale des particules en fonction de l'angle de rotation du disque rotatif passant par un maximum, on place les deux éléments d'impact dans des positions situées de part et d'autre de ce maximum et correspondant à des fréquences identiques pour la largeur voulue, et on fait varier la largeur d'épandage réelle jusqu'à ce que le dispositif d'affichage donne une information selon laquelle les fréquences d'impact des deux éléments sont identiques;

- on fait usage d'un moyen soustracteur qui produit un signal correspondant à la différence algébrique des signaux électriques délivrés par les circuits électroniques associés à chaque élément d'impact, une information représentative de ce signal étant visualisée sur ledit dispositif d'affichage;

- les moyens pour faire varier la largeur d'épandage comprennent une goulotte orientable adaptée pour faire varier l'emplacement de la zone de chute des grains quittant la trémie sur le disque;

- le dispositif d'affichage étant situé au poste de conduite de la machine d'épandage, on peut commander cette goulotte orientable à distance depuis ce dernier;

- le réglage de la largeur d'épandage est automatiquement et directement asservi à la mesure de densité faite par les éléments d'impact;

- on utilise des éléments d'impact qui sont adaptés pour générer des sons lorsqu'ils sont à l'impact des particules.

Le système pour comparer les densités en grains d'un flux de grains en suspension en deux zones distinctes de ce flux qui est destiné à la mise en oeuvre de ce procédé est remarquable en ce qu'il comprend :

- des moyens permettant de faire varier la largeur d'épandage;

- une paire d'éléments d'impact rigides, sous forme de tubes, ajustables transversalement, aptes à générer des sons lorsqu'ils sont exposés à l'impact des grains, ces éléments étant destinés à être placés chacun dans l'une desdites zones;

- une paire de microphones, chacun logé de manière étanche aux poussières, dans l'une des extrémités de l'un desdits éléments d'impact tubulaires, dont l'autre extrémité est fermée, chaque microphone étant adapté pour transformer en signaux électriques les sons générés par l'élément d'impact dans lequel il est logé;

- un circuit électronique de traitement de ces signaux, qui délivre des signaux électriques qui sont fonctions des fréquences d'impact des grains contre chaque élément d'impact;

- un dispositif (510) d'affichage d'une information représentative de ces signaux.

Selon des modes de réalisation possibles :

- le circuit électronique comprend, montés en série, un préamplificateur de signal, un filtre, et un redresseur;

- le système comprend un moyen soustracteur apte à produire un signal correspondant à la différence algébrique des signaux électriques provenant de chacun des deux éléments d'impact, et pour visualiser sur le dispositif d'affichage une information représentative de ce signal;

- les deux éléments d'impact sont montés sur un support commun qui est fixé à la trémie avec possibilité de réglage latéral;

- les deux éléments d'impact sont à écartement variable;

- les éléments d'impact tubulaires sont disposés verticalement.

D'autres caractéristiques et avantages de l'invention apparaîtront de la description et des dessins annexés qui en représentent un mode de réalisation préférentiel.

Sur ces dessins :

- la figure 1 est une vue de face schématique d'une machine d'épandage d'engrais;

- la figure 2 est une vue de dessus schématique des deux disques d'épandage équipant la machine;

- la figure 3 est un diagramme représentatif de la répartition de l'engrais sur des bandes d'épandage adjacentes;

- la figure 4 est une vue schématique en perspective, avec arrachement partiel, représentant un disque d'épandage à proximité duquel est monté un système conforme à l'invention;

- la figure 5 est une vue de dessus illustrant la possibilité de réglage latéral de ce système par rapport au disque;

- la figure 6 est une vue en coupe longitudinale du capteur équipant le système;

- la figure 7 est un diagramme montrant les différents composants du circuit électronique de traitement des signaux équipant le système;

- la figure 8 est un schéma du circuit d'amenée des signaux émis par deux capteurs au dispositif d'affichage ;

- la figure 9 montre un spectre de diffusion transversal des engrais à la sortie d'un disque ;

- la figure 10 illustre l'opération de réglage de la largeur d'épandage, qui est obenue par translation latérale du spectre effectif pour le faire coïncider avec le spectre théorique ;

- la figure 11 est une vue schématique, en vue de dessus, d'un support de capteurs du type amovible et repliable, le support étant représenté en position de travail ;

- la figure 12 représente le même support à l'état replié (en vue de son rangement).

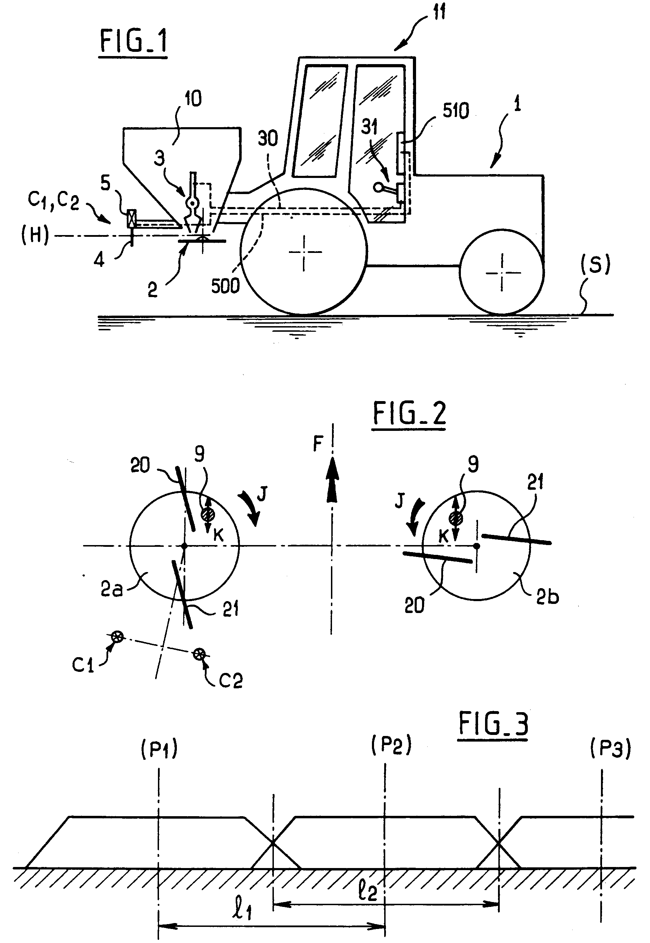

La figure 1 représente une machine épandeuse d'engrais comprenant un tracteur agricole 1 dont la cabine de pilotage est référencée 11, à l'arrière duquel est montée une trémie 10 contenant les engrais à épandre sur un sol arable **S**. L'engrais est un produit en vrac, constitué de particules granulaires, ci-après appelées grains.

Le fond de la trémie présente de manière bien connue, deux ouvertures d'évacuation des grains, disposées symétriquement de part et d'autre de l'axe longitudinal de la machine, et surplombant chacun un disque distributeur rotatif 2.

La figure 2 représente la paire de disques, référencés 2a et 2b, en vue de dessus. Le sens d'avance de la machine est référencé **F**.

Les disques sont situés dans un plan approximativement horizontal et tournent conjointement autour d'un axe vertical, à la même vitesse constante et en sens inverse, comme symbolisé par les flèches **J** à la figure 2. L'entraînement des disques se fait par un système de transmission approprié, depuis le tracteur, de manière également bien connue, les disques 2 sont pourvus d'une paire de pales 20, 21, disposées en des emplacements diamétralement opposés des disques, et s'étendant selon une direction formant un angle par rapport à la direction radiale. Les pales sont fixées sur la face supérieure des disques.

Elles assurent la projection des grains s'écoulant de la trémie et tombant sur les disques, par effet centrifuge. Le flux de grains dispersé forme une nappe qui s'étend transversalement dans un plan voisin de l'horizontale lorsque les grains quittent la machine, pour redescendre ensuite progressivement, et retomber au sol, couvrant une bande d'épandage d'une largeur déterminée.

La figure 3 représente un diagramme figurant la densité de recouvrement du sol au cours de mouvement aller et retour de la machine sur le sol.

Chaque passage $P_1$, $P_2$, $P_3$ réalise une distribution à densité à peu près constante, sauf sur les bords où la densité décroît plus ou moins brutalement, de manière approximativement linéaire ; l'opérateur s'arrange pour que les passages successifs se fassent avec un certain recouvrement, de sorte que les densités des deux passages s'ajoutent, ce qui permet d'obtenir une densité globale à peu près constante.

Pour cela, il est important que l'écartement $l_1$ de deux passages successifs corresponde à la largeur moyenne $l_2$ d'épandage.

La machine représentée à la figure 1 comprend des moyens permettant de faire varier la largeur d'épandage $l_2$.

Ces moyens sont les mêmes que ceux décrit dans FR-A-2 673 420 déjà cité.

Il s'agit d'une goulotte orientable 3 interposée entre chacune des deux ouvertures de sortie de la trémie 10 et apte à dévier le flux de grains quittant la trémie pour la faire tomber en une zone à position variable de chaque disque.

La goulotte peut être commandée à distance à partir de moyens de commande 31, tels qu'une manette par exemple, situés dans la cabine de pilotage 11 et donc directement accessibles à l'opérateur.

La transmission entre le moyen de commande 31 et la goulotte orientable 3, symbolisée par la ligne en traits interrompus 30 à la figure 1, peut se faire de manière appropriée, par voie mécanique ou autre.

A la figure 2 on a représenté par les plages hachurées 9 les zones de chute des grains sur chacun des disques. En modifiant l'orientation de la goulotte, on peut déplacer cette zone de chute vers l'intérieur ou vers l'extérieur du disque, comme cela est symbolisé par les doubles flèches **K**.

De préférence, les deux goulottes sont reliées cinématiquement, si bien que le changement des zones de chute sur chacun des disques se fait conjointement, et dans le même sens.

Ainsi, on est assuré d'obtenir toujours une dispersion symétrique des grains, de part et d'autre de l'axe longitudinal de la machine.

Chaque grain projeté quitte le disque avec une vitesse qui est la somme géométrique d'une vitesse circonférentielle (suivant le sens de rotation du disque) et d'une vitesse radiale (dirigée vers l'extérieur).

Cette vitesse sera d'autant plus grande que le grain sera tombé plus près du centre du disque, car le mouvement lui aura été imprimé durant un temps plus long.

Pour augmenter la largeur $l_2$ de l'épandage, il faut donc rapprocher la zone 9 du centre des disques. Inversement, pour réduire la largeur d'épandage $l_2$, il faut l'écarter vers l'extérieur du disque.

Le problème qui se pose lorsqu'on veut obtenir une largeur prédéterminée, résulte du fait que, pour un emplacement identique des zones de chute 9, la largeur $l_2$ va être différente selon la nature de l'engrais utilisé.

Pour résoudre ce problème, l'invention propose d'associer à l'un des disques 2, par exemple au disque **2a**, un jeu de capteurs $C_1$, $C_2$ fixés à l'arrière de la trémie. Chaque capteur comprend un élément d'impact 4 qui est positionné dans la nappe de grains quittant le disque, nappe sensiblement horizontale référencée **H** à la figure 1, ainsi qu'un circuit de traitement électronique 5 fournissant un signal électrique représentatif de la fréquence d'impact des grains contre les éléments 4, et par conséquent de la densité spatiale des grains en chacune des deux zones où sont placés ces éléments. Ce signal est amené par un câble électrique 500 à un dispositif d'affichage 510 du signal. Le dispositif d'affichage est de type quelconque. Il peut consister en un écran d'un tube cathodique, en un voltmètre à cadran et aiguille, ou en une rangée de diodes électroluminescentes par exemple.

Ainsi, l'opérateur chargé de la conduite du tracteur et de l'opération d'épandage, installé dans la cabine de pilotage 11, a en permanence accès à l'information relative à la densité de répartition des grains de la nappe projetée par le disque **2a**, en deux zones de cette nappe qui sont décalées transversalement par rapport au sens d'avance. Ce même opérateur peut, comme déjà dit plus haut, agir sur l'orientation des goulottes 3 depuis ce même poste de conduite, grâce aux moyens de commande 31.

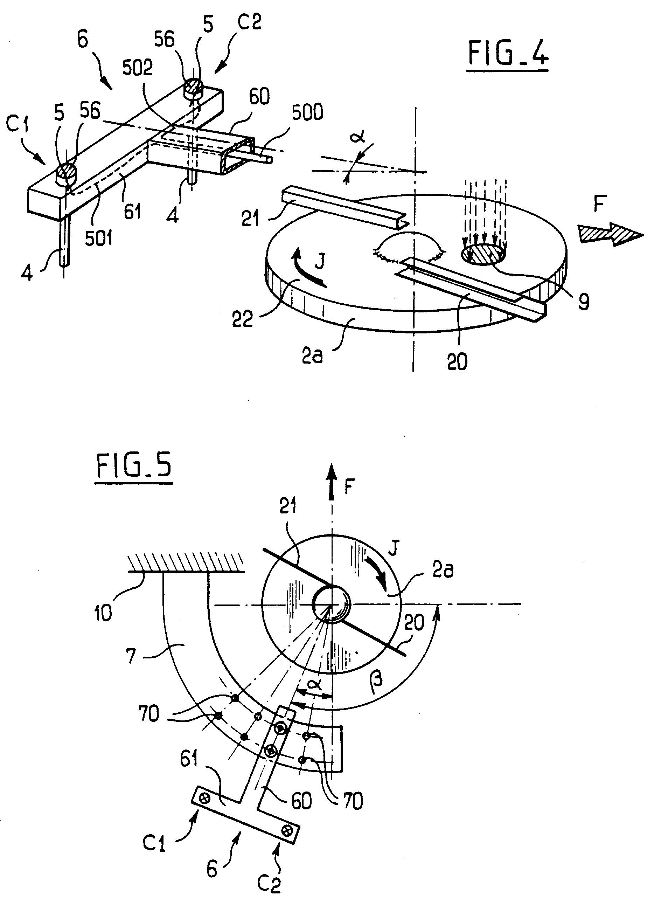

Les figures 4 et 5 représentent schématiquement le montage des deux capteurs $C_1$, $C_2$ à proximité du disque. Ces deux capteurs sont portés par un support 6 qui, vue de dessus, affecte la forme générale d'un "T". Les branches longitudinale 60 et transversale 61 de ce "T" sont des tubes métalliques, de section rectangulaire. Le "T" s'inscrit dans un plan sensiblement horizontal, la branche longitudinale 60 étant orientée à peu près radialement par rapport au disque **2a**, tandis que la branche transversale 61 est située à l'arrière. Ce support 6 est monté, avec possibilité de réglage latéral angulaire de sa position sur une plaque de montage 7 qui est solidaire de la trémie 10. Cette plaque 7 affecte, en vue de dessus, une forme en arc de cercle, centrée sur le disque **2a**.

La plaque 7 présente plusieurs paires de trous 70 qui permettent le montage du support 6 suivant des positions angulaires différentes, le montage se faisant de manière connue au moyen de boulons traversant une paire de trous 70.

On a désigné par la référence $\alpha$ l'angle que forme la branche 60 du support 6 par rapport à l'axe longitudinal d'avance de la machine, et par $\beta$ l'angle qu'il forme par rapport au plan transversal de la machine $(\beta = \alpha + \pi/2)$.

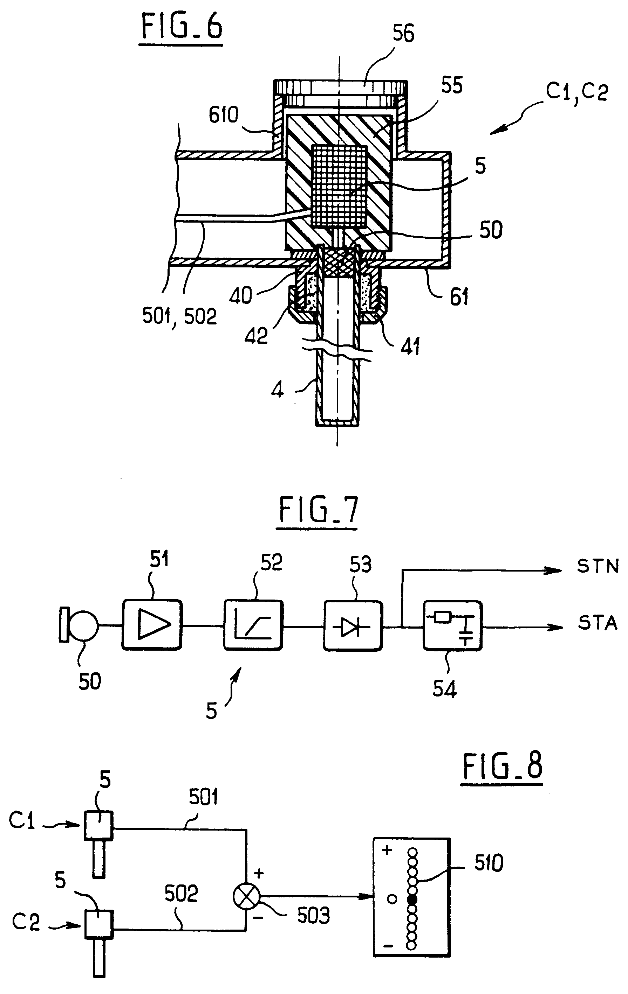

Chacun des capteurs $C_1$, $C_2$ est disposé à une extrémité de la branche transversale 61. Les éléments d'impact 4 sont des tubes cylindriques en métal, d'axe vertical, à fond fermé dirigé vers le bas. Comme on le verra plus loin, en référence à la figure 7, à chaque tube 4 est associé un module 5 formant circuit électronique, qui est logé dans la branche tubulaire 61. Un couvercle obturateur 56 fixé sur le dessus de la branche 61 permet le montage et le démontage du module.

Les signaux fournis par les modules 5 sont acheminés par des conducteurs 501, 502 logés dans la branche tubulaire 61 et qui se rejoignent pour former un câble 500 passant dans la branche 60, à l'extrémité de laquelle elle ressort pour être amenée ensuite, par des moyens de guidage non représentés jusqu'au dispositif d'affichage 510.

Des conducteurs électriques appropriés, non représentés, qui peuvent également avantageusement transiter par le câble 500, permettent d'amener aux deux capteurs $C_1$, $C_2$ l'énergie électrique nécessaire à leur bon fonctionnement.

Cette énergie peut être fournie par la batterie équipant le tracteur 1 ou par des piles logées dans le boîtier du dispositif d'affichage 510.

La vue en coupe de la figure 6 représente en détail l'un des capteurs $C_1$ ou $C_2$. Le tube 4 est réalisé dans un matériau résistant à la corrosion due à l'impact des grains. Il est par exemple en acier inoxydable. A titre indicatif, son diamètre est compris entre 10 et 15 millimètres. Sa longueur doit être suffisante pour qu'il soit exposé à la totalité des grains constituant la nappe de grains en suspension quittant le disque. A titre indicatif, cette longueur est comprise entre 10 et 20 centimètres, par exemple de l'ordre de 15 centimètres.

Le tube 4 est porté par une pièce de montage 40 inséré dans la face inférieure de la branche de support 61, et y est fixé par l'intermédiaire d'un presse-étoupe 41 qui agit sur une garniture de serrage 42, cette garniture assurant un montage exempt de vibrations du tube sur son support.

Dans l'extrémité haute et ouverte du tube est logé un microphone 50, c'est-à-dire un capteur acoustique apte à émettre des signaux électriques qui sont fonction des sons recueillis. Ces signaux sont transmis au module électronique 5. Ce dernier est enrobé dans une masse de résine protectrice 55. Le couvercle 56, déjà mentionné, s'adapte de manière étanche aux poussières sur une collerette 610 de la face supérieure de la branche de support 61, si bien que toute la partie acoustique et électronique du capteur est à l'abri des agressions du milieu extérieur, notamment de la poussière.

La figure 7 représente les différents composants du circuit électronique constituant le module 5.

Le signal fourni par le microphone 50 est tout d'abord amplifié par le préamplificateur 51, puis filtré par un filtre 52. Les caractéristiques de ce filtre sont telles qu'il élimine les bruits et les sons dont la fréquence est inférieure à 1KHz, ce domaine de fréquence ne correspondant pas au son généré par l'impact des grains contre le tube 4.

Le signal passe ensuite par un redresseur 53 dont la fonction est notamment d'éliminer les pics de faible amplitude. A ce niveau on obtient un signal constitué d'impulsions qui correspond aux pics sonores principaux, réellement générés par des impacts de grains. Ce signal, appelé STN à la figure 7, est directement utilisable dans un système de traitement numérique.

Dans le cas d'une exploitation par un système de traitement analogique STA, le signal passe par un circuit intégrateur 54 qui établit la valeur moyenne des pics.

De manière générale, le signal émit par le module électronique 5 possède une tension qui est fonction de la fréquence des grains frappant le tube d'impact 4 du capteur.

Le schéma de la figure 8 fait apparaître un branchement des deux capteurs $C_1$ et $C_2$ sur un soustracteur 503. Celui-ci procède à la soustraction algébrique des deux signaux et fournit à l'afficheur 510 une information représentative du signal correspondant à la différence.

Il s'agit par exemple d'une colonne de diodes électroluminescentes, dont la diode centrale s'éclaire lorsque la différence est nulle, tandis que les diodes supérieures s'éclairent tour-à-tour au fur et à mesure que la différence devient positive, alors qu'inversement les diodes de la partie basse de la colonne s'éclairent successivement au fur et à mesure que la différence devient négative.

Les deux capteurs étant placés à faible distance l'un de l'autre, leur microphone capte des sons d'ambiance, notamment le bruit du moteur du tracteur, qui sont identiques ou très proches quant à leur intensité et à leur fréquence. Ces sons , qui sont des sons parasites, vont donc être éliminés par le soustracteur.

Le signal qui correspond à la différence des sons émis par chaque élément d'impact 4 vont donc réellement concerner l'impact des grains venant frapper chacun des éléments 4, et le signal délivré par le soustracteur va être représentatif de la différence des fréquences d'impact et donc de la différence des densités spatiales en grains du flux, dans chacune des deux zones occupées par les éléments d'impact 4.

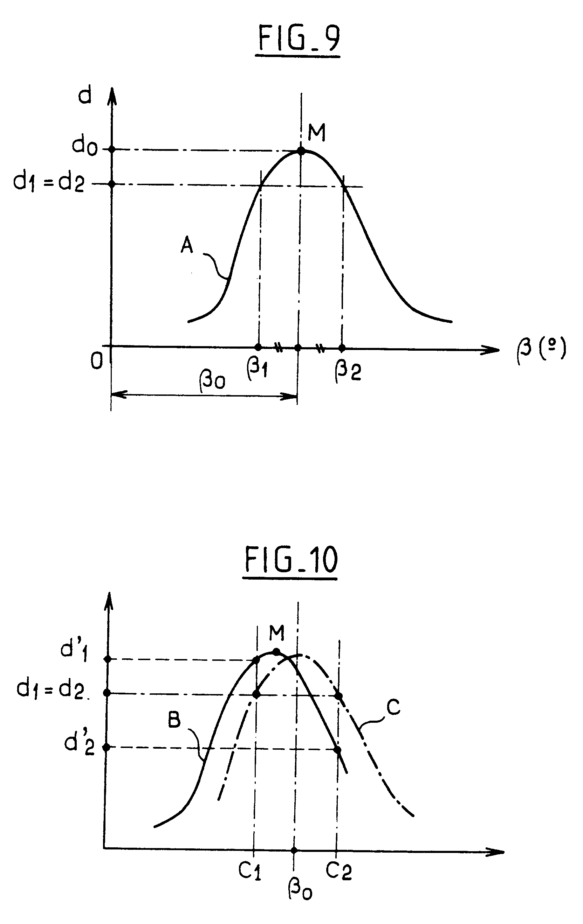

La courbe de la figure 9 est une courbe représentant la densité volumique **d** des grains au sein de la nappe de grains en suspension quittant le disque, en fonction de la position angulaire transversale de la zone considérée, cette orientation étant définie par l'angle β qui a déjà été mentionné en référence à la figure 5;

En observant cette courbe **A** - qu'on appelle usuellement "spectre de diffusion" - on observe qu'en deçà d'un certain angle minimal, et au-delà d'un certain angle maximal, il n'y a pas de grain diffusé (densité nulle).

Entre ces deux limites, on observe une croissance progressive jusqu'à un maximum **M**, puis une décroissance progressive de la densité.

La densité maximale au point **M** est désigné $d_0$.

On a désigné par $β_0$ l'angle correspondant au maximum.

La courbe **A** forme un dôme sensiblement symétrique de part et d'autre de l'angle $β_0$. Ainsi, si on prend deux angles $β_1$ et $β_2$ tels que $β_0 - β_1 = β_2 - β_0$, les densités $d_1$ et $d_2$ correspondant à ces deux angles sont égales.

La courbe **A** illustrée à la figure 9 correspond au spectre de diffusion d'un type d'engrais particulier, dans des conditions de travail bien définies - et notamment pour un emplacement bien défini de la zone de chute du produit sur les disques - correspondant à une largeur d'épandage déterminée.

Comme l'a constaté la demanderesse à la suite de nombreux essais, la position angulaire de ce maximum **M** de la courbe est directement liée à la largeur d'épandage, ceci quelle que soit la nature de l'engrais utilisé.

Nous allons maintenant expliquer de quelle manière, partant de cette constatation, il est facile à l'opérateur de régler la largeur d'épandage à la valeur souhaitée, pour le type d'engrais auquel il a affaire, en mettant en oeuvre les deux capteurs décrits plus haut.

L'opérateur commence par positionner le support 6 sur la plaque de montage 7, dans la position qui correspond à la largeur voulue.

A cet effet les paires de trous 70 pour la fixation du support 6 sont avantageusement identifiées par un marquage indiquant la largeur d'épandage recherchée, marquage déterminé par le fabricant suite à des essais préliminaires. Supposons que cette largeur, qui est par exemple de 21 mètres, corresponde à l'angle $\beta_0$.

L'opérateur procéde alors à un épandage d'engrais sur le sol. Il pilote la machine depuis la cabine de conduite 11, la goulotte 3 se trouvant dans une position quelconque.

A moins que, par extraordinaire, cette position corresponde à la position voulue, la courbe **B** donnant le spectre de l'épandage ainsi réalisé, représentée à la figure 10, va être décalée par rapport à la courbe idéale **C**, de sorte que les deux capteurs $C_1$ et $C_2$ (dont l'orientation angulaire est symétrique de part et d'autre de l'angle $\beta_0$) vont être soumis à des fréquences d'impact différentes. Dans l'exemple illustré à la figure 10, la densité de grains $d'_1$ correspondant au capteur $C_1$ est supérieure à la densité $d'_2$ du capteur $C_2$.

Le signal affiché sur le dispositif 510, qui correspond à la différence entre $d'_1$ et $d'_2$ n'est donc pas nulle. Par conséquent, l'opérateur va agir sur les moyens de commande 31 pour modifier l'orientation de la goulotte 3 dans un sens tel que cette différence diminue. Il réalise ainsi une translation du spectre vers la droite de la figure 10, la position voulue correspondant à la courbe **C** étant atteinte lorsque le signal affiché est nul, ce qui correspond à $d_1 = d_2$.

Du fait que les deux goulottes orientables sont cinématiquement reliées l'une à l'autre, le spectre d'épandage de l'autre disque est simultanément modifié, et on obtient donc la largeur recherchée - en l'occurence 21 mètres -.

Si on doit changer de type d'engrais mais conserver cette largeur, on ne change pas la position du support 6. En cours de travail, il suffit de modifier l'orientation de la goulotte pour obtenir à nouveau les mêmes densités au niveau de chacun des deux capteurs, pour être certain d'avoir la bonne largeur.

Pour une autre largeur de travail on modifiera la position du support 6, et donc du jeu de capteurs **C1, C2**.

Dans le mode de réalisation de la figure 5, le réglage de la position du support 6 se fait de manière discontinue, de sorte qu'il n'est possible que de couvrir certaines valeurs déterminées de largeur.

Il va de soi qu'on pourrait également prévoir un réglage continu, permettant de se positionner dans toute position intermédiaire souhaitée. Une fois que la largeur souhaitée a été obtenue, le système selon l'invention n'a plus d'utilité pour l'opérateur.

Dans un mode possible de montage, le capteur reste tout de même monté sur la machine, mais n'est pas mis en service. En raison de leur faible diamètre, les tubes 4 ne gênent pas la distribution normale de l'engrais.

Toutefois, on peut prévoir un montage du support 6 amovible ou escamotable. Ainsi, dans un mode de réalisation possible, le support pourrait être escamoté en position inactive par pivotement le long de la trémie, afin de dégager l'espace en regard du disque.

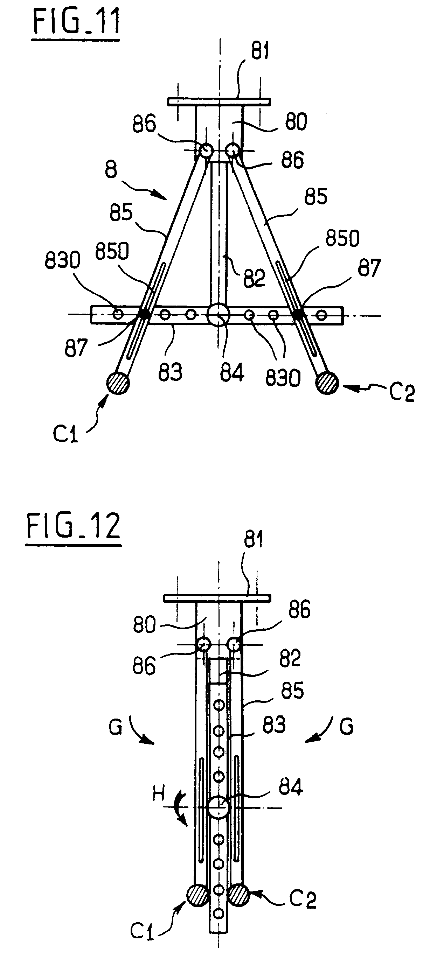

Dans un autre mode de réalisation possible, dont un exemple est illustré aux figures 11 et 12, le support des capteurs est amovible, et peut être replié dans une position de rangement, dans laquelle il occupe un faible encombrement. Il peut ainsi être facilement rangé, par exemple à l'intérieur de la cabine 11.

Le support escamotable 8 des figures 11 et 12 comporte une pièce 80 pourvue d'une plaque de montage 81 permettant de le fixer à l'arrière de la trémie, par exemple, à l'aide de vis.

Les capteurs **C1**, **C2** sont montés à l'extrémité de deux bras 85 pouvant pivoter à la manière des branches d'un compas autour de deux axes 86 solidaires de la pièce 80. Cette dernière est également solidaire d'un bras longitudinal 82 dont l'autre extrémité porte un pivot 84 pour une traverse 83. Le pivot 84 se trouve au centre de cette traverse, et celle-ci porte sur ces deux côtés une série de trous 830 permettant le passage de boulons de fixation 87 pour les deux bras 85. Les boulons traversent des lumières 850 prévues dans les bras 85, qui autorisent leur débattement. En position active, les bras 82 et 83 forment respectivement les branches longitudinale et transversale d'un "T".

En choisissant les trous 830 de passage des boulons, il est possible de faire varier l'écartement mutuel des deux capteurs $C_1$ et $C_2$, ce qui peut être intéressant dans certaines applications.

Après avoir désolidarisé ce support de la trémie, on peut le replier. Pour cela, il suffit d'enlever les boulons 87, de faire pivoter la traverse 83 de 90° pour qu'elle se superpose à la branche 82 (flèche **H**, figure 12) puis de rapprocher les deux bras 85 l'un de l'autre (flèches **G**).

Le dispositif peut alors être facilement rangé, sous un faible encombrement, par exemple dans la cabine de pilotage.

Le système qui fait l'objet de l'invention pourra être monté dès l'origine sur des machines d'épandage. Il pourra aussi être conçu pour s'adapter sur des machines du commerce, non équipées d'origine d'un tel système.

Selon un mode de réalisation possible, le réglage de la largeur d'épandage est directement asservi à la mesure de densité faite par le (ou les) capteur(s). Ainsi, dans le cas de goulottes orientables, des moyens de commande de cette orientation, par exemple des vérins, sont pilotés automatiquement par un dispositif approprié en fonction du signal émis par le soustracteur 503 jusqu'à ce que ce signal devienne nul.

On pourrait associer au dispositif de déplacement des goulottes un système de mémorisation des réglages. Un tel agencement est particulièrement intéressant lorsqu'on doit faire varier la largeur d'épandage au cours de l'avance de la machine, par exemple linéairement, lorsque l'on a affaire à une extrémité de champ "en pointe". Ainsi, si on doit passer par exemple d'une largeur d'épandage de 28m à une largeur de 12m sur une course donnée, l'opérateur va positionner d'abord les capteurs sur une largeur correspondant à 28m, actionner la goulotte pour que le réglage corresponde à cette largeur, et mémoriser ce réglage. Il va agir de la même manière pour la largeur 12m. Le pilotage de la goulotte se fera ensuite, manuellement ou automatiquement, entre les deux valeurs extrêmes ainsi mémorisées.

On pourrait prévoir sur le dispositif de commande 31 des goulottes des repères, voire des butées, correspondant à une fourchette de largeurs d'épandage. Dans ce cas, l'opérateur pourra moduler la largeur effective en travaillant entre ces repères - de manière continue ou discontinue (par crans) - au moins d'un côté, ce qui peut être utile notamment pour épandre les engrais sur des parcelles en pointe (le long de bordures obliques).

On pourrait utiliser aussi le système objet de l'invention pour délivrer une information sur le débit de grains distribués, par exemple en faisant la somme des signaux émis par plusieurs capteurs.

## Revendications

1.  Procédé de réglage de la largeur d'épandage de particules granulaires sur le sol, sur une machine d'épandage comprenant une trémie (10) contenant les grains à épandre, et dont le fond présente au moins une ouverture de sortie par gravité des grains, ainsi qu'au moins un disque rotatif (2), d'axe sensiblement vertical, disposé en-dessous de ladite ouverture de sortie des grains, et apte à les projeter par effet centrifuge de telle manière que le flux de grains en suspension quittant la machine s'étale selon une nappe approximativement horizontale, cette machine étant équipée d'au moins un élément d'impact (4) positionné dans ladite nappe, d'un circuit électronique (5) apte à délivrer un signal électrique qui est fonction de la fréquence d'impact des grains contre l'élément d'impact, ainsi que d'un dispositif (510) d'affichage d'une information représentative de ce signal, des moyens (31-3) étant prévus qui permettent de faire varier la largeur d'épandage, caractérisé par le fait qu'on utilise deux éléments d'impact ajustables transversalement, qu'on place dans des positions qui, pour la largeur voulue, correspondent à des fréquences d'impact prédéterminées, et qu'on fait varier la largeur réelle d'épandage jusqu'à ce que les informations fournies au dispositif d'affichage (510) soient représentatives de la largeur voulue.

2.  Procédé selon la revendication 1, mis en oeuvre pour un épandage dans lequel la courbe (A) de répartition de la densité spatiale des particules en fonction de l'angle de rotation du disque rotatif (2) passe par un maximum (M), caractérisé par le fait qu'on place les deux éléments d'impact (4) dans des positions situées de part et d'autre de ce maximum et correspondant à des fréquences identiques pour la largeur voulue, et qu'on fait varier la largeur d'épandage jusqu'à ce que le dispositif d'affichage (510) donne une information selon laquelle les fréquences d'impact des deux éléments (4) sont identiques.

3.  Procédé selon la revendication 2, caractérisé par le fait qu'on fait usage d'un moyen soustracteur (503) qui produit un signal correspondant à la différence algébrique des signaux électriques délivrés par les circuits électroniques (5) associés à chaque élément d'impact (4), une information représentative de ce signal étant visualisée sur ledit dispositif d'affichage (510).

4.  Procédé selon l'une des revendications 1 à 3, caractérisé par le fait que les moyens pour faire varier la largeur d'épandage comprennent une goulotte orientable (3) adaptée pour faire varier l'emplacement de la zone de chute (9) des grains quittant la trémie (10) sur le disque (2).

5.  Procédé selon la revendication 4, caractérisé par le fait que ledit dispositif d'affichage (510) étant situé au poste de conduite (11) de la machine d'épandage, on peut commander cette goulotte orientable (3) à distance depuis ce dernier.

6.  Procédé selon l'une des revendications 1 à 5, dans lequel le réglage de la largeur d'épandage est automatiquement et directement asservi à la mesure de densité faite par les éléments d'impact (4).

7.  Procédé selon l'une des revendications 1 à 6, caractérisé par le fait qu'on utilise des éléments d'impact (4) adaptés pour générer des sons lorsqu'ils sont exposés à l'impact des particules.

8.  Système pour comparer les densités en grains d'un flux de grains en suspension en deux zones distinctes de ce flux, destiné à la mise en oeuvre du procédé selon la revendication 1, caractérisé par le fait qu'il comprend :

    -   des moyens (31-3) permettant de faire varier la largeur d'épandage;
    -   une paire d'éléments d'impact rigides (4), sous forme de tubes, ajustables transversalement, aptes à générer des sons lorsqu'ils sont exposés à l'impact des grains, ces éléments (4) étant destinés à être placés chacun dans l'une desdites zones ;

- une paire de microphones (50), chacun logé de manière étanche aux poussières, dans l'une des extrémités de l'un desdits éléments d'impact tubulaires (4), dont l'autre extrémité est fermée, chaque microphone (50) étant adapté pour transformer en signaux électriques les sons générés par l'élément d'impact dans lequel il est logé;

- un circuit électronique (5) de traitement de ces signaux, qui délivre des signaux électriques qui sont fonctions des fréquences d'impact des grains contre chaque élément d'impact (4);

- un dispositif (510) d'affichage d'une information représentative de ces signaux.

9. Système selon la revendication 8, caractérisé par le fait que ledit circuit électronique comprend, montés en série, un préamplificateur de signal (51), un filtre (52), et un redresseur (53).

10. Système selon la revendication 8 ou 9, caractérisé par le fait qu'il comprend un moyen soustracteur (503) apte à produire un signal correspondant à la différence algébrique des signaux électriques provenant de chacun des deux éléments d'impact (5), et pour visualiser sur un dispositif d'affichage (510) une information représentative de ce signal.

11. Système selon l'une des revendications 8 à 10, caractérisé par le fait que les deux éléments d'impact (4) sont montés sur un support commun (6) qui est fixé à la trémie avec possibilité de réglage latéral.

12. Système selon l'une des revendications 8 à 10, caractérisé par le fait que les deux éléments d'impact (4) sont à écartement variable.

13. Système selon l'une des revendications 8 à 12, caractérisé par le fait que lesdits éléments d'impact tubulaires (4) sont disposés verticalement.

**Claims**

1. A method of adjusting the width of spread of granular particles broadcast on the ground by a broadcaster comprising a hopper (10) containing the grains to be spread and having a bottom with at least one gravity outlet for the grains, together with a rotary disk (2) of substantially vertical axis disposed beneath said grain outlet and suitable for broadcasting them centrifugally in such a manner that the flow of grains in suspension leaving the broadcaster is spread out in an approximately horizontal sheet, said broadcaster being fitted with at least one impact element (4) positioned in said sheet, with an electronic circuit (5) suitable for delivering an electrical signal which is a function of the frequency of grain impact against the impact element, and with a display device (510) for displaying information representative of said signal, means (31-3) being provided to enable the width of spread to be varied, the method being characterized by the fact that two transversely adjustable impact elements are used which, for the given width, are placed in positions corresponding to predetermined impact frequencies, and the real width of spread is caused to vary until the information provided to the display device (510) represents the desired width.

2. A method according to claim 1, implemented for spreading in which the curve (A) showing the distribution of the spatial density of particles as a function of angle of rotation of the rotary disk (2) passes through a maximum (M), the method being characterized by the fact that the two impact elements (4) are placed in positions situated on either side of the maximum and correspond to frequencies that are identical for the desired width, and the width of spread is varied until the display device (510) indicates that the impact frequencies of the two elements (4) are identical.

3. A method according to claim 2, characterized by the fact that use is made of subtracter means (503) producing a signal corresponding to the algebraic difference between the electrical signals delivered by the electronic circuits (5) associated with each of the impact elements (4), with information representative of said signal being displayed on said display device (510).

4. A method according to any one of claims 1 to 3, characterized by the fact that the means for varying the width of spread comprise a steerable chute (3) adapted to vary the location of the drop zone (9) where the grains leaving the hopper (10) drop onto the disk (2).

5. A method according to claim 4, characterized by the fact that said display device (510) is situated at the position (11) from which the broadcaster is driven and the steerable chute (3) is controllable remotely from that position.

6. A method according to any one of claims 1 to 5, in which adjustment of the width of spread is automatically and directly servo-controlled to the density measurement performed by the impact elements (4).

7. A method according to any one of claims 1 to 6, characterized by the fact that impact elements (4) are used which are adapted to generate sounds when they are exposed to particle impact.

8. A system for comparing grain densities in two distinct zones of a flow of grains in suspension, for the purpose of implementing the method of claim 1, the system being characterized by the fact that it comprises:

- means (31-3) enabling width of spread to be varied;
- a pair of rigid impact elements (4) in the form of tubes that are transversely adjustable and that are suitable for generating sounds when exposed to the impact of grains, each of said elements (4) being designed to be placed in a respective one of said zones;
- a pair of microphones (50) each received in dustproof manner in one of the ends of a respective one of said tubular impact elements (4), the other end thereof being closed, each microphone (50) being adapted to transform the sounds generated by the impact element in which it is housed into electrical signals;
- an electronic circuit (5) for processing said signals, to deliver electrical signals which are functions of the frequencies of grain impacts against each of the impact elements (4); and
- a display device (510) for displaying information representative of said signals.

9. A system according to claim 8, characterized by the fact that said electronic circuit comprises, connected in series, a signal preamplifier (51), a filter (52), and a rectifier (53).

10. A system according to claim 8 or 9, characterized by the fact that it comprises subtracter means (503) suitable for producing a signal corresponding to the algebraic difference between the electrical signals coming from each of the two impact elements (4) and for displaying on a display device (510) information that is representative of said signal.

11. A system according to any one of claims 8 to 10, characterized by the fact that the two impact elements (4) are mounted on a common support (6) which is fixed to the hopper with the ability of being adjusted laterally.

12. A system according to any one of claims 8 to 10, characterized by the fact that the spacing between the two impact elements (4) is variable.

13. A system according to any one of claims 8 to 12, characterized by the fact that said tubular impact elements (4) are disposed vertically.

**Patentansprüche**

1. Verfahren zur Regelung der Streubreite von körnigen Teilchen auf dem Boden über eine Streumaschine mit einem Vorratstrichter (10), welcher die zu streuenden Körner enthält, und dessen Boden wenigstens eine Öffnung zum Austrag der Körner über die Schwerkraft, sowie wenigstens eine Drehscheibe (2) mit praktisch vertikaler Achse aufweist, welche unterhalb der Austragsöffnung der Körner angeordnet ist, und welche dafür eingerichtet ist, sie durch Zentrifugalwirkung derart herauszuschleudern, daß sich der die Maschine verlassende Körnerfluß in Suspension gemäß einer näherungsweise horizontalen Fläche ausbreitet, wobei diese Maschine mit wenigstens einem in der Fläche positionierten Aufprallelement (4), einer elektronischen Schaltung (5), welche dafür eingerichtet ist, ein elektrisches Signal zu liefern, das abhängig von der Auftreffrequenz der Körner gegen das Aufprallelement ist, sowie einer Anzeigevorrichtung (510) für eine Information, die dieses Signal darstellt, ausgestattet ist, wobei Vorrichtungen (31-3) vorgesehen sind, welche ermöglicht die Streubreite zu verändern, dadurch gekennzeichnet, daß zwei quer einstellbare Aufprallelemente verwendet werden, welche in Positionen angeordnet werden, die für die gewünschte Streubreite den vorbestimmten Auftreffrequenzen entsprechen, und daß die reale Streubreite verändert wird bis die der Anzeigevorrichtung (510) zugeführten Informationen repräsentativ für die gewünschte Streubreite sind.

2. Verfahren gemäß Anspruch 1, welches für eine Streuung eingesetzt wird, bei welcher die Verteilungskurve (A) der räumlichen Dichte der Teilchen in Abhängigkeit von dem Drehwinkel der Drehscheibe (2) über ein Maximum (M) geht, dadurch gekennzeichnet, daß die beiden Aufprallelemente (4) in Positionen angeordnet werden, welche beidseits dieses Maximums liegen, und Frequenzen entsprechen, welche für die gewünschte Streubreite identisch sind, und daß die Streubreite variiert wird bis die Anzeigevorrichtung (510) eine Information ausgibt, gemäß welcher die Auftreffrequenzen der beiden Elemente (4) identisch sind.

3. Verfahren gemäß Anspruch 2, dadurch gekennzeichnet, daß eine Subtrahiervorrichtung (503) verwendet wird, welche ein Signal erzeugt, das der algebraischen Differenz der elektrischen Signale entspricht, welche von den elektronischen Schaltungen (5) geliefert werden, die jedem Aufprallelement (4) zugeordnet sind, wobei eine für dieses Signal repräsentative Information auf der Anzeigevorrichtung (510) sichtbar gemacht wird.

4. Verfahren gemäß einem der Ansprüche 1 bis 3, dadurch gekennzeichnet, daß die Vorrichtungen zum Verändern der Streubreite eine einstellbare Rutsche (3) aufweisen, welche dafür eingerichtet ist, den Standort des Fallbereiches (9) der Körner, welche den Trichter (10) über die Scheibe (2) verlassen, zu verändern.

5. Verfahren gemäß Anspruch 4, dadurch gekennzeichnet, daß aufgrund dessen, daß die Anzeigevorrichtung (510) im Führerstand (11) der Streumaschine angeordnet ist, diese einstellbare Rutsche (3) mit Abstand von diesem letzteren gesteuert werden kann.

6. Verfahren gemäß einem der Ansprüche 1 bis 5, bei welchem die Regelung der Streubreite automatisch und direkt abhängig von der von den Aufprallelementen (4) durchgeführten Dichtemessung ist.

7. Verfahren gemäß einem der Ansprüche 1 bis 6, dadurch gekennzeichnet, daß Aufprallelemente (4) verwendet werden, welche dafür eingerichtet sind, Töne zu erzeugen, wenn sie dem Auftreffen der Teilchen ausgesetzt sind.

8. System zum Vergleich der Körnerdichten eines Körnerflusses in Suspension in zwei verschiedenen Bereichen dieses Flusses, welches dazu bestimmt ist, das Verfahren gemäß Anspruch 1 einzusetzen, dadurch gekennzeichnet, daß es aufweist:

   - Vorrichtungen (31-3), welche ermöglichen, die Streubreite zu verändern;

   - ein Paar steife Aufprallelemente (4) in Form von Röhren, welche quer einstellbar und dafür eingerichtet sind, Töne zu erzeugen, wenn sie dem Auftreffen der Körner ausgesetzt sind, wobei diese Elemente (4) dafür bestimmt sind, jeweils in dem einen der Bereiche angeordnet zu werden;

   - ein Paar Mikrophone (50), welche jeweils staubdicht in dem einen der Enden des einen der röhrenartigen Aufprallelemente (4), dessen anderes Ende geschlossen ist, angeordnet sind, wobei jedes Mikrophon (50) dafür eingerichtet ist, die Töne, welche von dem Aufprallelement erzeugt werden, in welchem es gelagert ist, in elektrische Signale umzuwandeln;

   - eine elektronische Schaltung (5) zur Verarbeitung dieser Signale, welche elektrische Signale liefert, die abhängig von den Auftreffrequenzen der Körner gegen jedes Aufprallelement (4) sind;

   - eine Anzeigevorrichtung (510) für eine Information, die repräsentativ für diese Signale ist.

9. System gemäß Anspruch 8, dadurch gekennzeichnet, daß die elektronische Schaltung einen Signalvorverstärker (51), einen Filter (52) und einen Gleichrichter (53), welche in Reihe geschaltet sind, aufweist.

10. System gemäß Anspruch 8 oder 9, dadurch gekennzeichnet, daß es eine Substrahiervorrichtung (503) aufweist, welche geeignet ist, ein Signal entsprechend der algebraischen Differenz der von jedem der beiden Aufprallelemente (4) kommenden elektrischen Signale zu erzeugen, und auf einer Anzeigevorrichtung (510) eine für dieses Signal repräsentative Information sichtbar zu machen.

11. System gemäß einem der Ansprüche 8 bis 10, dadurch gekennzeichnet, daß die beiden Aufprallelemente (4) auf einem gemeinsamen Träger (6) angebracht sind, welcher an dem Trichter mit der Möglichkeit der seitlichen Einstellung befestigt ist.

12. System gemäß einem der Ansprüche 8 bis 10, dadurch gekennzeichnet, daß die beiden Aufprallelemente (4) in ihrem Abstand zueinander variabel sind.

13. System gemäß einem der Ansprüche 8 bis 12, dadurch gekennzeichnet, daß die röhrenartigen Aufprallelemente (4) vertikal angeordnet sind.

FIG.1

FIG.2

FIG.3

FIG.4

FIG.5

## FIG_6

## FIG_7

STN

STA

## FIG_8

## FIG_9

## FIG_10

## FIG.11

## FIG.12